Europäisches Patentamt

(19) European Patent Office

Office européen des brevets

(11) **EP 0 686 452 B1**

(12) **EUROPEAN PATENT SPECIFICATION**

(45) Date of publication and mention
of the grant of the patent:
**20.05.1998 Bulletin 1998/21**

(21) Application number: **95901597.5**

(22) Date of filing: **25.11.1994**

(51) Int. Cl.$^6$: **B23H 7/10**, B23H 7/06

(86) International application number:
**PCT/JP94/01991**

(87) International publication number:
**WO 95/14548** (01.06.1995 Gazette 1995/23)

(54) **METHOD AND APPARATUS FOR CONTROLLING WIRE ELECTRODE TENSION**

VORRICHTUNG UND VERFAHREN ZUM REGELN DER ZUGSPANNUNG EINER
DRAHTFÖRMIGEN ELEKTRODE

METHODE ET DISPOSITIF POUR REGLER LA TENSION DE L'ELECTRODE EN FORME DE FIL

(84) Designated Contracting States:
**CH DE LI**

(30) Priority: **26.11.1993 JP 319220/93**

(43) Date of publication of application:
**13.12.1995 Bulletin 1995/50**

(73) Proprietor: **FANUC LTD.**
**Minamitsuru-gun, Yamanashi 401-05 (JP)**

(72) Inventors:
• **ARAKAWA, Yasuo**
**D-7302 Ostfildern-Ruit (DE)**
• **ITO, Masaya**
**Fussa-shi, Tokyo 197 (JP)**

• **FUJITA, Minoru,**
**Fanuc Dai-3 Vira-karamatsu**
**Yamanashi 401-05 (JP)**

(74) Representative:
**Overbury, Richard Douglas**
**Haseltine Lake & Co,**
**Imperial House,**
**15-19 Kingsway**
**London WC2B 6UD (GB)**

(56) References cited:
**JP-A- 2 100 857**     **JP-A- 2 224 925**
**JP-B-53 013 839**

## Description

The present invention relates to a wire electrode tension control method and an apparatus thereof for an electric discharge machine.

A wire electric discharge machine makes a wire electrode (referred to as "wire" hereinafter) travel while applying a tension to the wire, and generates an electric discharge phenomenon between the wire and a workpiece, thus carrying out desired machining with respect to the workpiece. If the tension applied to the wire is insufficient, this causes the wire to vibrate with a large amplitude, thereby causing the decline of machining accuracy or an unnecessary short circuit between the workpiece and the wire. On the other hand, if the tension is too high, the wire is liable to be broken.

Thus, tension of the wire in a discharge machining range should be kept at an optimum value so as not to cause a poor machining accuracy due to insufficient tension or break of wire due to too high tension. Kind of the wire and a wire diameter, etc. have to be considered in determining the optimum tension.

Normally, in order to apply predetermined tension to a traveling wire, the following measures are employed (for example, refer to Japanese Patent Application Laid-Open (KOKAI) No. 1-115548):

* applying a braking force to a wire which travels on the upstream side (wire reel side) of discharge machining range with respect to the travel direction of wire by means of a braking device,
* feeding the wire in the traveling direction by means of a traveling wire drive device located on the downstream side (wire winding-up side) of the discharge machining range with respect to wire travel direction, and,
* applying a predetermined tension to the wire by adjusting the braking force of the above braking device.

Further, a tension of a wire on the upstream side of discharge machining range with respect to the wire travel direction is always detected by means of tension detection means, and the deviation of the detected tension from a predetermined tension is fed back to a braking device for adjusting the output of the braking device, thus controlling a tension applied to the wire so that the tension falls within a predetermined range. (see Japanese Patent Application Laid-open (KOKAI) No. 3-111129).

An example of the use of such a braking device is provided by JP-A-2-224925, whilst one particular design of tension detecting means is provided by EP-A-0 445 296.

However, even if the wire tension is controlled to a preset value through the foregoing feedback control, break of wire can occur. In particular, the break of the wire occurs frequently in the case of taper machining of workpiece.

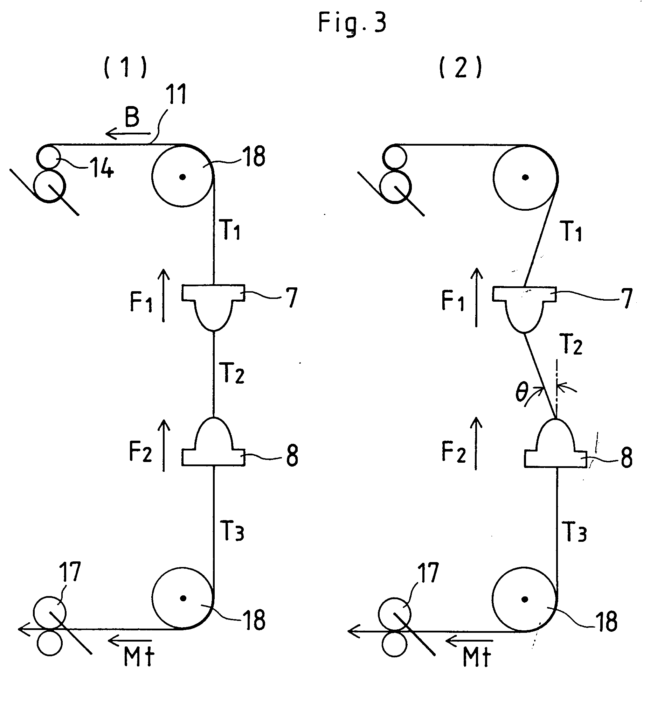

This is because when the wire is guided by a wire guide, a sliding friction is produced during the travel of the wire, and the magnitude of sliding friction depends upon a cone angle θ (see a conceptual view shown in Fig. 3 (2). As a result, if a sliding friction between the wire and the wire guide increases as the cone angle θ increases, the wire tension in a discharge machining range increases in proportion to the increase of the cone angle.

As described above, in the case of a conventional technique of detecting a wire tension on the upstream side of a discharge machining range with respect to the wire travel direction, and adjusting an output of the brake device so that a value of the tension is kept constant, it is difficult to always keep the wire tension in a discharge machining range constant in executing taper machining. For this reason, when a machining operation of the electric discharge machine transfers from straight machining to taper machining, the wire tension in a discharge machining range increases, possibly causing the break of the wire, or possibly causing the decline of machining accuracy due to the slack of the wire occurring after the transfer of machining operation from the taper machining to straight machining.

An object of the present invention is to provide a wire electrode tension control method and an apparatus thereof, which is capable of applying a stable and constant tension to a wire in straight machining as well as in taper machining.

First to fourth aspects of the present invention are set out in respective ones of attached claims 1, 3, 4 and 5.

According to one embodiment of the present invention, in a wire electric discharge machine, which is capable of executing taper machining and provided with a braking device for applying a braking force to a traveling wire electrode on the upstream side of the traveling wire electrode with respect to the discharge machining range between a pair of wire guides, and a travel drive means for feeding the wire electrode to the upstream side, located on the downstream side of the traveling wire electrode, tension of a wire electrode which is situated on the downstream side of the traveling wire electrode with respect to the discharge machining area and on the upstream side of a position where the travel drive means is located is detected; deviation of the tension detected by the tension detection means from a preset value is calculated, and variation in a tension of a wire electrode in a discharge machining range resulting from a change in a sliding friction between the wire electrode and wire guides is obtained based on the deviation; and a braking force of the brake device is adjusted based on the variation in the tension.

Further, according to another embodiment of the present invention, the relation between an inclined angle of a wire electrode between a pair of wire guides and a braking force command value to a brake device for applying a braking force to said wire electrode is set and stored; inclined angles of a wire electrode currently executing a machining operation in an area between the wire guides are read successively from machining programs; and braking force of the brake device is adjusted according to the braking force command value corresponding to the read inclined angle of the wire electrode.

In embodiments of the present invention, therefore, even when the sliding friction between the wire and wire guides varies due to the change of a cone angle in a taper machining operation, wire tension in a discharge machining range is detected and the detected tension is adjusted to constant value. Thus, even if the cone angle varies, tension of the wire electrode in a discharge machining range is always kept constant, thereby eliminating the disadvantages such as the break of wire caused by the tension of wire being too high, and decline of machining accuracy due to tension of wire being too low.

Brief Description of the Drawings

Fig. 1 is a view schematically showing the entirety of a wire cut electric discharge machine according to one embodiment of the present invention;
Fig. 2 is a block diagram showing principal parts of a CNC device according to the embodiment of the present invention; and
Fig. 3 is a conceptual view for explaining a tension of a wire electrode in the case of a straight machining (1) and in the case of a taper machining (2).

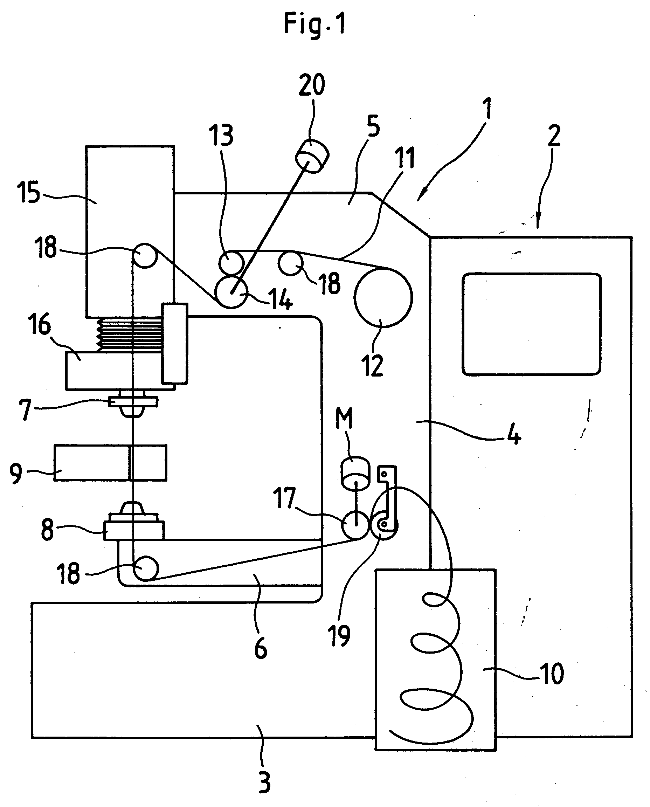

Fig. 1 schematically shows the entirety of a wire electric discharge machine according to one embodiment of the present invention, and the wire electric discharge machine comprises a machine body 1 and a CNC device 2. The machine body 1 includes a base 3, a longitudinal column 4, a horizontal column 5 and a lower arm 6. A Z-axis drive unit 15 is mounted on the distal end of the horizontal column 5. Further, a U-V axis unit 16 is attached to the Z-axis drive device. Furthermore, an upper wire guide 7 is attached to the U-V axis unit 16.

The X-axis drive device 15 moves the U-V axis unit 16 in the up and down direction (Z-axis direction); the U-V axis unit 16 moves a wire electrode (referred to as "wire" hereinafter) 11 in the directions of two axes (U-axis, Z-axis) crossing at right angles to the horizontal direction (direction perpendicular to the Z-axis). As a result, the upper wire guide 7 can be moved in three axial directions orthogonal to the base 3, that is, up and down (Z-axis), right and left (U-axis) and front and rear (V-axis) direction.

A lower wire guide 8 is mounted on the distal end of the lower arm 6. A reference number 9 denotes a workpiece which is placed on a table (not shown) driven in the X-axis and Y-axis directions perpendicular to the Z-axis (vertical axis). A reference number 10 denotes a wire recovery box.

Referring now to Fig. 1, a traveling path of the wire 11 will be described in order starting from a wire feed bobbin 12.

The wire 11 fed from the wire feed bobbin 12 is guided by a guide roller 18, and is held between a brake roller 14 and a brake pinch roller 13, so that the wire travels in a braked condition. Further, the wire is guided by another guide roller 18, and reaches the upper wire guide 7. The wire 11 passing the upper wire guide 7 passes discharge machining range (workpiece 9), and reaches the lower wire guide 8. Furthermore, the wire 11 passing the lower wire guide 8 is guided by still another guide 18, and is held between a feed roller 17 and a pinch roller 19 to be fed to the downstream side. Finally, the wire 11 is recovered in the wire recovery box 10.

The brake roller 14 is connected to an output shaft of a powder clutch 20 fixed to the horizontal column 5. The powder clutch 20 applies a braking force responsive to an input current to a free rotation of the brake roller 14.

The feed roller 17 is driven by means of a feed motor M. The feed motor M is controlled so that the wire travels at a predetermined speed.

With a constitution as described above, a voltage is applied between the wire electrode 11 and the workpiece 9 to generate a discharge between them, and desired profile machining is executed with respect to the workpiece 9. In the case of executing taper machining with respect to the workpiece 9, the U-V axis unit 16 is driven to move the upper wire guide 7 in the U- and V-axis directions (right and left direction and direction vertical to a plane of Fig. 1) perpendicular to the Z-axis, and the wire electrode 11 is inclined in a discharge machining range between the upper and lower wire guides 7 and 8, thus executing taper machining with respect to the workpiece 9.

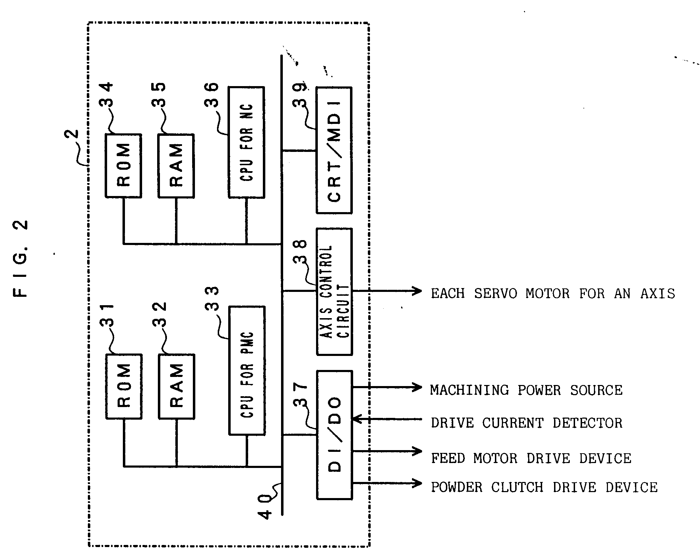

A CNC device 2 has a processor 33 for a programmable controller (hereinafter referred to as "PMC") and a processor 36 for numerical control, as shown in block diagram of principal parts in Fig. 2.

The processors 33 and 36 are connected to each other through a bus 40. Connected to the bus 40 are a ROM 31 for storing sequence programs, and wire tension control programs, which will be described later, to be executed by the processor 33 for PMC, a RAM 32 as data memory used for operation or temporarily stores data by the processor 33 for PMC, a ROM 34 for storing system programs of a numerical control unit, and a RAM 35 for temporarily storing data or machining programs read from a tape reader (not shown) with respect to the workpiece 9.

Moreover, connected to the bus 40 are an input-output circuit 37, a axis control circuit 38 and a CRT/MDI 39 used as an input unit. The input-output circuit 37 connects with the powder clutch 20 as a braking device, a drive device of the feed motor M, a current detector for detecting a driving current the feed motor M, various actuators such as a discharge machining power source. Also, the axis control circuit 38 connects with servo motors for the respective X-, Y- and Z-axes of the table (not shown) for placing the workpiece, and servo motors for U- and V-axes of the U-V axis unit 16 (Fig. 2 shows the axis control circuit for one servo motor only).

When electric discharge machining is started, the processor 33 for PMC drives the discharge machining power source under a preset discharge machining condition. Then, the processor outputs a preset wire traveling speed command to the feed motor driving device, while outputting a preset wire tension command to the powder clutch 20 of the braking device in order to let the wire electrode 11 travel at a predetermined speed and with a predetermined tension.

On the other hand, the processor 36 for NC drives X-, Y-, Z-, U-, and V-axes servo motors according to machining programs stored in RAM 35 through the axis control circuit 38, and relatively moves the wire electrode 11 to execute discharge machining with respect to the workpiece 9.

Referring now to Fig. 3, a tension applied to various sections of the traveling wire will be described below.

In Fig. 3 (1), a symbol B represents a braking force applied to the wire by the brake roller 14, a symbol F1 a sliding friction between the upper wire guide 7 and the wire electrode 11, a symbol F2 a sliding friction between the lower wire guide 8 and the wire electrode 11, and a symbol Mt an output torque of the feed motor M for driving the feed roller 17. In this case, it is considered that there is no sliding friction between the guide rollers 18, 18 and the wire 11. A symbol T1 represents a wire tension between the brake roller 14 the upper wire guide 7, a symbol T2 a wire tension between the upper and lower wire guides 7 and 8 in a discharge machining range, and a symbol T3 a wire tension between the lower wire guide 8 and the feed roller 17.

Whereupon, the wire 11 travels while a braking force "B" being applied, so that the following equation can be obtained.

$$T1 = B$$

A wire tension T2 in a discharge machining range is expressed by the following equation because a sliding friction F1 of the upper wire guide 7 is further added to the wire tension T1.

$$T2 = B + F1$$

Also, a wire tension T3 between the lower wire guide 8 and the feed roller 17 is expressed by the following equation because a sliding friction F2 of the lower wire guide 7 is further added to the wire tension T2 in the discharge machining range.

$$T3 = T2 + F2$$

On the other hand, the wire 11 travels at a predetermined speed according to an output torque Mt of the feed motor M for the feed roller 17, so that the tension T3 is equal to the output torque Mt. Therefore, the following equation is obtained.

$$Mt = T3$$

In this case, if the upper and lower wire guides 7 and 8 are the same type, and the relation of F1 = F2 = F is established, the following equations can be obtained.

$$T2 = B + F$$

$$Mt = B + 2F$$

Thus, assuming that a cone angle $\theta$ changes into $\theta + \Delta\theta$ under the condition that the braking force B is kept constant and the sliding friction F of the wire guides changes into F + $\Delta$ according to the change in the cone angle, a wire tension T2' in the discharge machining range and an output torque Mt' of the feed motor M in this case are individually expressed as follows:

$$T2' = B + [F + \Delta F]$$

$$yt' = B + [2F + 2\Delta F]$$

Thus, if a change 2$\Delta$F in the output torque Mt caused by a change of the cone angle $\theta$ is detected, and the braking force B is adjusted so as to be reduced by 1/2 (= $\Delta$F) of the detected change (that is, B is adjusted to B - $\Delta$F), a wire tension T2" in the discharge machining range is expressed by the following equation:

$$T2" = [B - \Delta F] + [F + \Delta F]$$
$$= B + F$$

That is, T2" = T2 , so that the wire tension in the discharge machining range can be kept constant.

So, in the present embodiment, the following measures are taken on the basis of the principle described above.

(1) Reading with the processor 33 for PMC a drive current detected by the current detector for detecting a drive current of the feed motor M for each predetermined period.
(2) Calculating a tensile deviation by subtracting the read drive current value from a preset value (a current value corresponding to a predetermined wire tension (T3)).
(3) Executing a proportional plus integral action on the basis of the tensile deviation to calculate a braking force command value.

(4) Outputting the braking force command value to the drive device of the powder clutch 20 that functions as a braking device.

Through the above processings, the drive device of the powder clutch 20 controls a braking force on the basis of the inputted braking force command. As a result, the wire tension in the discharge machining range is always kept at a predetermined wire tension regardless of a cone angle θ.

More specifically, the tensile deviation is integrated until the detected tension (the drive current of the feed motor M) reaches a predetermined tension, and in a steady state such that the detected tension coincides with the predetermined tension and the tensile deviation becomes "0", a value integrated thus far is outputted to the brake device, so that the wire tension can be kept at a preset value. On the other hand, if a sliding friction between the wire guides 7, 8 and the wire 11 increases according to an increase in a cone angle θ, a resistance to the travel of the wire 11 increases; therefore, the drive current of the motor is increased in order that the feed motor M may rotate at a predetermined speed.

As a result, although the wire tension increases, the tensile deviation, which is the difference between a preset value and the detected drive current of the feed motor, decreases or becomes a negative value due to an increase in the drive current of the feed motor. Therefore, a braking force command inputted to the brake device will become a command for reducing a braking force. If a braking force lowers in this manner, the wire tension lowers; whereupon, the wire tension is subjected to feedback control so as to coincide with a predetermined tension.

As described above, the wire tension is subjected to feedback control and kept at a predetermined value, so that the wire tension does not increase in taper machining. Therefore, the wire tension is always kept at a predetermined tension. This serves to prevent the wire from being broken, and to maintain a uniform machining accuracy in discharge machining.

In the above embodiment, means for detecting drive current of the feed motor is used as a means for measuring a wire tension. However, beside the method described above, the means for measuring a wire tension may be located in a discharge machining range. In the case where it is difficult to locate the means for measuring a wire tension in the discharge machining range, the means may be located in a non-discharge machining range between the feed roller 17 and the wire guide (the lower wire guide 8 in the above embodiment) on the side of wire travel drive means.

In the above embodiment, further, a wire tension is detected and subjected to feedback control so as to coincide with a preset value. However, the wire tension may be kept at an optimum value in a manner such that a braking force command value to a cone angle is previously measured, and the measured value is stored in a nonvolatile portion of the RAM 32 so that a braking force is read and outputted in accordance with a cone angle read from machining programs.

## Claims

1. A wire electrode tension control method comprising the steps of:

   detecting the tension in a wire electrode (11) at a portion on the downstream side of the traveling wire electrode (11) with respect to a discharge machining range between a pair of wire guides (7,8), at each predetermined time period;
   calculating a variation of sliding friction between said wire electrode (11) and wire guides (7,8) caused by change in an inclined angle (θ) of said wire electrode (11) between said paired wire guides (7,8), on the basis of a change in the detected tension;
   feeding back the calculated variation to a brake device (20) which applies a braking force to said wire electrode (11) on the upstream side of the traveling wire electrode (11) with respect to said discharge machining range, thereby increasing or decreasing said braking force by only the calculated variation; and
   always keeping the tension of said wire electrode (11) in said discharge machining range constant, regardless of any change in the inclined angle (θ) of the wire electrode (11) between said upper and lower wire guides (7,8).

2. A wire electrode tension control method according to claim 1, wherein the tension of the wire electrode (11) is detected by detecting a drive current of a feed motor (M) for feeding said wire electrode (11), said feed motor (M) being located on the downstream side of the traveling wire electrode (11) with respect to said discharge machining range.

3. A wire electrode tension control method comprising the steps of:

   previously setting and storing a relation of an inclined angle (θ) of a wire electrode (11) between a pair of wire guides (7,8) to a braking force command value for a brake device (20) which applies a braking force to said wire electrode (11);
   successively reading from a machining program an inclined angle (θ) of a wire electrode (11) currently used for executing a machining operation in an area between said wire guides (7,8);
   adjusting a braking force of said brake device (20) by a braking force command value corresponding to said read inclined angle ($\theta$) of the wire electrode (11); and

always keeping the tension of said wire electrode (11) in a discharge machining range constant, regardless of any change in the inclined angle ($\theta$) of the wire electrode (11) between said pair of wire guides (7,8).

4. A wire electrode tension control apparatus for a wire electric discharge machine capable of executing taper machining, comprising a brake device (20) which applies a braking force to a wire electrode (11) traveling on the wire electrode feeding side, located on one side of a discharge machining range, and a travel drive means (M) which makes the wire electrode (11) travel and is located on the other side of the discharge machining range, wherein there are provided;

a storage means (32) for previously storing a command value for said brake device (20), said command value being set so that the optimum wire tension in the discharge machining range can be obtained in accordance with a cone angle ($\theta$); and

a control means (38) for reading and outputting a command value to said brake device (20) from said storage means (32) in accordance with a cone angle ($\theta$) commanded according to a program, and for driving said brake device (20) according to said command value.

5. A wire electrode tension control apparatus for a wire electric discharge machine capable of executing taper machining, comprising a brake device (20) which applies a braking force to a traveling wire electrode (11), on the upstream side of the traveling wire electrode (11) with respect to the discharge machining range between a pair of wire guides (7,8), and a travel drive means (M) which feeds said wire electrode (11) from the upstream side and is located on the downstream side of the traveling wire electrode (11), wherein there are provided;

a tension detection means for detecting the tension of the wire electrode on the downstream side of the traveling wire electrode (11) with respect to the discharge machining range but on the upstream side of a position where said travel drive means (M) is located;

a tension variation calculation means (33) for calculating a deviation of the tension detected by said tension detection means from a preset value, and for calculating a variation of the tension in the wire electrode (11) in the discharge machining range resulting from a change in sliding friction between said wire electrode (11) and wire guides (7,8), based on said deviation; and

a braking force adjusting means for adjusting a braking force of said brake device (20) on the basis of said variation in the tension.

**Patentansprüche**

1. Drahtelektroden-Zugspannungsregelungsverfahren, das Schritte umfaßt zum

Erfassen der Zugspannung in einer Drahtelektrode (11) in einem Teil auf der stromabwärtigen Seite der sich bewegenden Drahtelektrode (11) in bezug auf einen Entladungsbearbeitungsbereich zwischen einem Paar von Drahtführungen (7, 8) in jeder vorbestimmten Zeitperiode,

Berechnen einer Änderung der Gleitreibung zwischen der Drahtelektrode (11) und den Drahtführungen (7, 8), die durch eine Änderung eines Neigungswinkels ($\theta$) der Drahtelektrode (11) zwischen den paarweise vorgesehenen Drahtführungen (7, 8) verursacht wird, auf der Grundlage einer Änderung der erfaßten Zugspannung,

Rückkoppeln der berechneten Änderung auf eine Bremseinrichtung (20), die eine Bremskraft auf die Drahtelektrode (11) auf der stromaufwärtigen Seite der sich bewegenden Drahtelektrode (11) in bezug auf den Entladungsbearbeitungsbereich ausübt, um dadurch die Bremskraft nur mittels der berechneten Änderung zu erhöhen oder zu erniedrigen, und

ständigen Konstanthalten der Zugspannung der Drahtelektrode (11) in dem Entladungsbearbeitungsbereich ungeachtet irgendeiner Änderung des Neigungswinkels ($\theta$) der Drahtelektrode (11) zwischen den oberen und unteren Drahtführungen (7, 8).

2. Drahtelektroden-Zugspannungregelungsverfahren nach Anspruch 1, bei dem die Zugspannung der Drahtelektrode (11) durch Erfassen eines Treiberstroms eines Vorbewegungsmotors (M) zum Vorbewegen der Drahtelektrode (11) erfaßt wird, wobei sich der Vorbewegungsmotor (M) auf der stromabwärtigen Seite der sich bewegenden Drahtelektrode (11) in bezug auf den Entladungsbearbeitungsbereich befindet.

3. Drahtelektroden-Zugspannungregelungsverfahren, das Schritte umfaßt zum

Vorabeinstellen und -speichern einer Beziehung eines Neigungswinkels ($\theta$) einer Drahtelektrode (11) zwischen einem Paar von Drahtführungen (7, 8) zu einem Bremskraft-Befehlswerts für eine Bremseinrichtung (20), die eine Bremskraft auf die Drahtelektrode (11) ausübt,

aufeinanderfolgenden Auslesen eines Neigungswinkels (θ) einer Drahtelektrode (11), die gegenwärtig zum Ausführen eines Bearbeitungsvorgangs in einem Bereich zwischen den Drahtführungen (7, 8) benutzt wird, aus einem Bearbeitungsprogramm,

Einstellen einer Bremskraft der Bremseinrichtung (20) mittels eines Bremskraft-Befehlswerts, der dem ausgelesenen Neigungswinkel (θ) der Drahtelektrode (11) entspricht, und

ständigen Konstanthalten der Zugspannung der Drahtelektrode (11) in dem Entladungsbearbeitungsbereich ungeachtet irgendeiner Änderung des Neigungswinkels (θ) der Drahtelektrode (11) zwischen dem Paar von Drahtführungen (7, 8).

4. Drahtelektroden-Zugspannungsregelungsvorichtung für eine elektrische Entladungsdrahtschneidemaschine, die in der Lage ist, eine Konusbearbeitung auszuführen, mit einer Bremseinrichtung (20), die eine Bremskraft auf eine Drahtelektrode (11) ausübt, welche sich auf der Drahtelektroden-Zuführungsseite bewegt, die sich auf einer Seite eines Entladungsbearbeitungsbereichs befindet, und einem Bewegungsantriebsmittel (M), das bewirkt, daß sich die Drahtelektrode (11) bewegt, und sich auf der anderen Seite des Entladungsbearbeitungsbereichs befindet, wobei vorgesehen sind:

ein Speichermittel (32) zum Vorabspeichern eines Befehlswerts für die Bremseinrichtung (20), wobei der Befehlswert derart eingestellt wird, daß die optimale Drahtzugspannung in dem Entladungsbearbeitungsbereich in Übereinstimmung mit einem Konuswinkel (θ) gewonnen werden kann, und

ein Regelungsmittel (38) zum Auslesen eines Befehlswerts aus dem Speichermittel (32) in Übereinstimmung mit einem Konuswinkel (θ) und Ausgeben des Befehls an die Bremseinrichtung (20), der gemäß einem Programm erteilt wird, und zum Treiben der Bremseinrichtung (20) gemäß dem Befehlswert.

5. Drahtelektroden-Zugspannungsregelungsvorrichtung für eine elektrische Entladungsdrahtschneidemaschine, die in der Lage ist, eine Konusbearbeitung auszuführen, mit einer Bremseinrichtung (20), die eine Bremskraft auf eine sich bewegende Drahtelektrode (11) ausübt, auf der stromaufwärtigen Seite der sich bewegenden Drahtelektrode (11) in bezug auf den Entladungsbearbeitungsbereich zwischen einem Paar von Drahtführungen (7, 8) und einem Bewegungsantriebsmittel (M), das die Drahtelektrode (11) von der stromaufwärtigen Seite her vorbewegt und sich auf der stromabwärtigen Seite der sich bewegenden Drahtelektrode (11) befindet, wobei vorgesehen sind:

ein Zugspannungserfassungsmittel zum Erfassen der Zugspannung der Drahtelektrode auf der stromabwärtigen Seite der sich bewegenden Drahtelektrode (11) in bezug auf den Entladungsbearbeitungsbereich, jedoch auf der stromaufwärtigen Seite einer Position, in der sich das Bewegungsantriebsmittel (M) befindet,

ein Zugspannungsänderungs-Berechnungsmittel (33) zum Berechnen einer Abweichung der Zugspannung, die durch das Zugspannungserfassungsmittel erfaßt ist, von einem voreingestellten Wert und zum Berechnen einer Änderung der Zugspannung in der Drahtelektrode (11) in dem Entladungsbearbeitungsbereich, die sich aus einer Änderung der Gleitreibung zwischen der Drahtelektrode (11) und den Drahtführungen (7, 8) ergibt, auf der Grundlage der Abweichung und

ein Bremskrafteinstellmittel zum Einstellen einer Bremskraft der Bremseinrichtung (20) auf der Grundlage der Änderung der Zugspannung.

## Revendications

1. Procédé de réglage de la tension d'une électrode en forme de fil, comprenant les étapes consistant à:

détecter la tension dans une électrode (11) en forme de fil à une portion du côté aval de l'électrode (11) en forme de fil en train de se déplacer, par rapport à une zone d'usinage par étincelage entre une paire de guide-fils (7, 8), à chaque période de temps prédéterminée;

calculer la variation de la friction de glissement entre ladite électrode (11) en forme de fil et les guide-fils (7, 8), provoquée par le changement de l'angle d'inclinaison (θ) de ladite électrode (11) en forme de fil entre ladite paire de guide-fils (7, 8), sur base d'un changement de la tension détectée;

renvoyer, à titre de signal en retour, la variation calculée à un dispositif de frein (20) qui exerce une force de freinage sur ladite électrode (11) en forme de fil du côté amont de l'électrode (11) en forme de fil en train de se déplacer, par rapport à ladite zone d'usinage par étincelage, pour ainsi ajouter à ou soustraire de ladite force de freinage uniquement par la variation calculée; et

toujours maintenir constante la tension de ladite électrode (11) en forme de fil dans ladite zone d'usinage par étincelage, quel que soit le changement intervenant dans l'angle d'inclinaison (θ) formé par l'électrode (11) en forme de fil entre lesdits guide-fils supérieur et inférieur (7, 8).

2. Procédé de réglage de la tension d'une électrode en forme de fil selon la revendication 1, dans lequel on détecte la tension de l'électrode (11) en forme de fil en détectant un courant d'entraînement d'un moteur d'alimentation (M) destiné à alimenter ladite électrode (11) en forme de fil, ledit moteur d'alimentation (M) étant situé du côté aval de l'électrode (11) en forme de fil en train de se déplacer, par rapport à ladite zone d'usinage par étincelage.

3. Procédé de réglage de la tension d'une électrode en forme de fil, comprenant les étapes consistant à:

régler au préalable et mettre en mémoire la relation entre un angle d'inclinaison (θ) formé par une électrode (11) en forme de fil entre une paire de guide-fils (7, 8) et une valeur de commande de force de freinage pour un dispositif de frein (20) qui exerce une force de freinage sur ladite électrode (11) en forme de fil;

lire successivement, à partir d'un programme d'usinage, un angle d'inclinaison (θ) formé par une électrode (11) en forme de fil en cours d'utilisation pour réaliser une opération d'usinage dans une zone s'étendant entre lesdits guide-fils (7, 8);

régler une force de freinage dudit dispositif de frein (20) via une valeur de commande de force de freinage correspondant à ladite lecture de l'angle d'inclinaison (θ) formé par l'électrode (11) en forme de fil; et

toujours maintenir constante la tension de ladite électrode (11) en forme de fil dans une zone d'usinage par étincelage, quel que soit le changement intervenant dans l'angle d'inclinaison (θ) formé par l'électrode (11) en forme de fil entre ladite paire de guide-fils (7, 8).

4. Appareil de réglage de la tension d'une électrode en forme de fil pour une machine d'usinage via étincelage par fil capable d'exécuter un usinage de forme conique, comprenant un dispositif de frein (20) qui exerce une force de freinage sur une électrode (11) en forme de fil en train de se déplacer du côté alimentation de l'électrode en forme de fil, situé d'un côté d'une zone d'usinage par étincelage, et un moyen d'entraînement de déplacement (M) qui met en oeuvre le déplacement de l'électrode (11) en forme de fil et qui est situé de l'autre côté de la zone d'usinage par étincelage, dans lequel on prévoit:

un moyen de mise en mémoire (32) pour mettre préalablement en mémoire une valeur de commande pour ledit dispositif de frein (20), ladite valeur de commande étant réglée de telle sorte que la tension de fil optimale dans la zone d'usinage par étincelage peut être obtenue par référence à un angle de conicité (θ); et un moyen de réglage (38) pour lire une valeur de commande et l'envoyer audit dispositif de frein (20) à partir dudit moyen de mise en mémoire (32) en fonction d'un angle de conicité (θ) commandé conformément à un programme et pour entraîner ledit dispositif de frein (20) en fonction de ladite valeur de commande.

5. Appareil de réglage de la tension d'une électrode en forme de fil pour une machine d'usinage via étincelage par fil capable d'exécuter un usinage de forme conique, comprenant un dispositif de frein (20) qui exerce une force de freinage sur une électrode (11) en forme de fil en train de se déplacer du côté amont de l'électrode (11) en forme de fil en train de se déplacer, par rapport à la zone d'usinage par étincelage entre une paire de guide-fils (7, 8) et un moyen d'entraînement de déplacement (M) qui alimente ladite électrode (11) en forme de fil à partir du côté amont et qui est situé du côté aval de l'électrode (11) en forme de fil en train de se déplacer, dans lequel on prévoit:

un moyen de détection de tension pour détecter la tension de l'électrode en forme de fil du côté aval de l'électrode (11) en forme de fil en train de se déplacer, par rapport à la zone parcours d'usinage par étincelage, mais du côté amont d'une position dans laquelle se trouve ledit moyen d'entraînement de déplacement (M);

un moyen de calcul (33) de la variation de tension pour calculer une déviation de la tension détectée par ledit moyen de détection de tension par rapport à une valeur préréglée et pour calculer une variation de la tension dans l'électrode (11) en forme de fil dans la zone d'usinage par étincelage provenant d'un changement de friction par glissement entre ladite électrode (11) en forme de fil et les guide-fils (7, 8), en se basant sur ladite déviation; et

un moyen de réglage de la force de freinage pour régler une force de freinage dudit dispositif de frein (20) sur la base de ladite variation de tension.

## Fig.1

F I G. 2

~2

| ROM | ~31 |
| RAM | ~32 |

CPU FOR PMC ~33

| ROM | ~34 |
| RAM | ~35 |

CPU FOR NC ~36

40

DI/DO ~37

AXIS CONTROL CIRCUIT ~38

CRT/MDI ~39

POWDER CLUTCH DRIVE DEVICE

FEED MOTOR DRIVE DEVICE

DRIVE CURRENT DETECTOR

MACHINING POWER SOURCE

EACH SERVO MOTOR FOR AN AXIS

10

Fig. 3